# EUROPÄISCHE PATENTANMELDUNG

(11) **EP 2 725 207 A1**
(43) Veröffentlichungstag der Anmeldung: **30.04.2014**
(21) Anmeldenummer: 12190351.2
(22) Anmeldetag: 29.10.2012
(51) Int. Cl.: F01K 17/02, F01K 23/06, F22B 1/18

(54) **Kraftwerk mit Dampfreformer und Gasspeicher, Verfahren zum Betrieb eines solchen Kraftwerkes sowie Verfahren zum Nachrüsten eines Kraftwerkes**

(71) Anmelder: Siemens Aktiengesellschaft, 80333 München (DE)
(72) Erfinder: Lenk, Uwe, 08064 Zwickau (DE); Tremel, Alexander, 91052 Erlangen (DE)

(57) **Zusammenfassung**

Die Erfindung betrifft ein Kraftwerk (1), aufweisend eine bei brenntechnischem Betrieb Abgas abgebende Verbrennungseinrichtung (2), einen Dampfreformer (10) zur Erzeugung von Synthesegas (61) mittels Reformierung eines kohlenwasserstoffhaltigen ersten Brennstoffs (60) mit Wasser (70), wobei der Dampfreformer (10) mit der Verbrennungseinrichtung (2) derart wärmetechnische verschaltet ist, dass bei brenntechnischem Betrieb der Verbrennungseinrichtung (2) der Dampfreformer (10) mit Wärme aus dem Abgas der Verbrennungseinrichtung (2) versorgt werden kann, wobei weiterhin ein Gasspeicher (20) umfasst ist, welcher mit dem Dampfreformer (10) fluidtechnisch zur Zwischenspeicherung des Synthesegases (61) verschaltet ist.

## Beschreibung

Die vorliegende Erfindung betrifft ein Kraftwerk aufweisend eine bei brenntechnischem Betrieb Abgas abgebende Verbrennungseinrichtung, einen Dampfreformer zur Erzeugung von Synthesegas mittels Reformierung eines kohlenwasserstoffhaltigen ersten Brennstoffs mit Wasser, wobei der Dampfreformer mit der Verbrennungseinrichtung derart wärmetechnisch verschaltet ist, dass bei brenntechnischem Betrieb der Verbrennungseinrichtung der Dampfreformer mit Wärme aus dem Abgas der Verbrennungseinrichtung versorgt werden kann. Weiterhin betrifft die vorliegende Erfindung ein Verfahren zum Betrieb eines solchen Kraftwerks wie auch ein Verfahren zum Nachrüsten eines bereits bestehenden Kraftwerks.

Aufgrund der vermehrten Einspeisung von elektrischer Energie aus fluktuierenden, erneuerbaren Energiequellen (Wind, Solar, etc.) müssen herkömmliche Kraftwerke zunehmend Regelaufgaben erfüllen, um das mitunter stark variierende Angebot an elektrischer Energie in den Stromversorgungsnetzwerken ausgleichen zu können. Zusätzlich sind aufgrund der vermehrten Einspeisung der aus den erneuerbaren Energiequellen stammenden elektrischen Leistung, die Auslastung herkömmlicher Kraftwerke zunehmend vermindert. Dies wirkt sich wiederum negativ auf die wirtschaftliche Bilanz dieser Kraftwerke aus.

Insbesondere Kraftwerke, die die Energieerzeugung auf Grundlage eines kombinierten Gas- und Dampfprozesses gewährleisten, benötigen zum wirtschaftlichen Betrieb eine verhältnismäßig hohe Anzahl an Volllaststunden während eines Jahres. Um trotz der verstärkt in die öffentlichen Stromversorgungsnetzwerke eingespeisten elektrischen Energie aus regenerativen Energiequellen einen dennoch wirtschaftlicheren Betrieb sichern zu können, muss eine erhöhte Flexibilisierung dieser Kraftwerksanlagen angestrebt werden. So kann bspw. eine Erhöhung des Wirkungsgrades im Teillastbetrieb den durchschnittlichen Gesamtwirkungsgrad des Kraftwerks merklich erhöhen. Ein anderer Ansatz wird u.a. verfolgt bei der Speicherung von elektrischer Energie bspw. in thermischer und/oder chemischer Energie und anschließender Rückverstromung dieser Energie zu Zeiten der erhöhten Nachfrage nach elektrischer Energie.

Die Umwandlung und Speicherung von elektrischer Energie wird bspw. mittels der Dampfreformierung verfolgt, wobei in einem Dampfreformer aus einem kohlenwasserstoffhaltigen Brennstoff zusammen mit Wasser ein Kohlenmonoxid haltiges wie auch Wasserstoff haltiges Synthesegas erzeugt wird. Der während dieser Dampfreformierung ablaufende Prozess lässt sich einfach durch die nachfolgende endotherme Reaktion (ΔH°=+205.6 kJ/mol) veranschaulichen:

CH₄ + H₂O ↔ CO + 3 H₂ (Reaktion 1)

Gemäß einer mitunter gleichzeitig ablaufenden exothermen Reaktion (Reaktion 2) wird aus dem durch die Dampfreformierung erzeugten CO durch Oxidation mit Wasser, Kohlendioxid und Wasserstoff erzeugt (ΔH°=-41.2 kJ/mol):

CO + H₂O ↔ CO₂ + H₂ (Reaktion 2)

Die sich aus den beiden oben stehenden Reaktionen 1 und 2 ergebende Gesamtreaktion ist weiterhin endotherm, so dass dem Reaktionssystem Wärme zugeführt werden muss, damit die Gesamtreaktion ablaufen kann.

Um die Reformierung ausreichend schnell ablaufen zu lassen, wird zusätzlich ein Metallkatalysator (typischerweise aus Nickel) zur Reaktionskatalyse eingesetzt. Die Reaktionstemperaturen betragen typischerweise zwischen 650 °C und 1100 °C. Aufgrund dieser hohen Reaktionstemperaturen verschiebt sich das Reaktionsgleichgewicht der Reaktion 1 ausreichend weit auf die rechte Seite und fördert die Bildung von Wasserstoff, so dass die Umsetzung in Synthesegas in wirtschaftlichem Maßstab erfolgen kann.

Zwar ist der Umsatz bei geringeren Reaktionstemperaturen, etwa bei Temperaturen von weniger als 650 °C denkbar, jedoch erfolgt dann der Umsatz typischerweise nicht ausreichend vollständig. Insbesondere bleibt in dem Reaktionssystem Wasser zurück, welches oft als unerwünscht betrachtet wird. Wird also die oben angeführten Reaktion 1 bei verhältnismäßig geringen Temperaturen ausgeführt, verschiebt sich das Reaktionsgleichgewicht nicht vollständig auf die rechte Seite. Zudem gewinnt die Reaktion 2, die üblicherweise bei niedrigeren Temperaturen durchgeführt wird, an Einfluss. Folglich ergibt sich ein Gemisch von Edukten und Produkten der oben angeführten Reaktionen 1 und 2. Das Verhältnis der in diesem Gemisch vorhandenen Edukte wie Produkte lässt sich mittels Einstellung der Reaktionstemperatur vorhersagen bzw. kontrollieren.

Gemäß dem Stand der Technik nach der US 7,707,837 B2 ist es bspw. bekannt, einen Prozess der Dampfreformierung in Verbindung mit einem Gasturbinenkraftwerk vorzusehen. Hierbei werden in einem Durchlaufprozess Wasserdampf und Erdgas in Synthesegas umgesetzt. Das Synthesegas selbst wird aus dem Durchlaufprozess entfernt und zur weiteren Nutzung außerhalb des Gasturbinenkraftwerks über ein Leitungssystem abgeleitet. Die für die Reformierung erforderliche Wärme wird durch die Abwärme des Abgases einer brennbetriebenen Gasturbine zur Verfügung gestellt. Zur Wärmeabgabe wird das Abgas einem Abhitzedampferzeuger zugeleitet, in welchem über geeignet angebrachte Wärmetauscher die für den Reformierungsprozess notwendige Wärme entnommen wird. Die aus diesem entnommene Wärme wird nachfolgend einem Dampfreformer zugeleitet, in welchem die Umsetzung des Erdgases mit Wasser zu Synthesegas erfolgt.

Einen vergleichbaren Vorschlag zur Integration einer Dampfreformierung in einem Gasturbinenkraftwerk wird bspw. in der Veröffentlichung "Gas turbine combined cycle with CO₂-capture using auto-thermal reforming of natural gas", Thormod Andersen und Hanne M. Kvamsdal sowie Olav Bolland in Proceedings of ASME TURBO EXPO 2000, Land, Sea and Air, May 8-11, 2000, Munich, Germany, vorgeschlagen. Der Vorschlag sieht vor, in einem mehrstufigen Durchlaufprozess Erdgas mit Wasser zu einem Synthesegas umzusetzen, wobei die für den Ablauf des Reformierungsprozesses erforderliche Wärme aus dem Abgas der regulär betriebenen Gasturbine entnommen wird.

Der Vorteil der Reformierung von kohlenwasserstoffhaltigen Brennstoffen, insbesondere Methan, in einem Erdgas liegt darin, dass durch die endotherm ablaufende Reaktion 1 ein Gemisch von Kohlenmonoxid und Wasserstoff gebildet wird, welches im Vergleich zu den Ausgangsstoffen Methan und Wasser einen deutlich höheren Brennwert aufweist. So ist bspw. die Rückreaktion gemäß Reaktion 1 zur Bildung von Methan stark exotherm. Durch die Aufnahme der aus dem Abgas entnommenen Wärme, kann diese in chemischer Form in dem Synthesegas zwischengespeichert werden. Wird das Synthesegas nachfolgend in einem weiteren industriellen Prozess eingesetzt, kann die so zwischengespeicherte chemische Energie erneut freigesetzt werden.

Nachteilig an diesen aus dem Stand der Technik bekannten Kraftwerksanordnungen, die mit einem Dampfreformer verschaltet sind, ist jedoch, dass die bei der Reformierung erzeugte chemische Energie nicht zur Verbesserung des Wirkungsgrades des Kraftwerks selbst beitragen kann. Vielmehr wird die in dem Synthesegas gespeicherte chemische Energie zur weiteren externen Verwendung, d.h. außerhalb des Kraftwerks vorgesehen. Dadurch gestaltet sich jedoch der Betrieb des Kraftwerks als ineffizient, da die für die Herstellung des Synthesegases erforderliche Wärme zusätzlich durch den Betrieb der Gasturbinenanlagen und damit durch die Verbrennung von Brennstoff zur Verfügung gestellt werden muss. Dies erlaubt weder eine verbesserte Flexibilisierung des Betriebs der Gasturbinenanlage noch eine Verbesserung des Gesamtwirkungsgrades. Zudem wird das während der Reformierprozesse erzeugte Synthesegas aus dem Kraftwerk abgeleitet und erfordert eine geeignete Leitungsinfrastruktur.

Folglich stellt es sich als technisch erforderlich dar, eine verbesserte Lösung vorzuschlagen, welche die aus dem Stand der Technik bekannten Nachteile vermeidet. Insbesondere soll die vorzuschlagende Lösung einen flexibleren Betrieb des Kraftwerks erlauben, wobei jedoch gleichzeitig die Gesamteffizienz des Kraftwerksprozesses verbessert werden soll. Weiter ist es Aufgabe der vorliegenden Erfindung, ein flexibles und effizientes Verfahren zum Betrieb eines solchen Kraftwerks vorzuschlagen. Ebenso stellt es sich als wünschenswert heraus, bereits bestehende Kraftwerke durch geeignete Nachrüstung flexibler und effizienter zu betreiben.

Diese der vorliegenden Erfindung zugrunde liegenden Aufgaben werden durch ein Kraftwerk gemäß Anspruch 1, ein Verfahren zum Betrieb eines solchen Kraftwerks gemäß Anspruch 7 wie auch durch ein Verfahren zum Nachrüsten eines Kraftwerks gemäß Anspruch 15 gelöst.

Insbesondere werden diese Aufgaben durch ein Kraftwerk gelöst, welches eine bei brenntechnischem Betrieb Abgas abgebende Verbrennungseinrichtung aufweist, sowie einen Dampfreformer zur Erzeugung von Synthesegas mittels Reformierung eines kohlenwasserstoffhaltigen ersten Brennstoffs mit Wasser, wobei der Dampfreformer mit der Verbrennungseinrichtung derart wärmetechnisch verschaltet ist, dass bei brenntechnischem Betrieb der Verbrennungseinrichtung der Dampfreformer mit Wärme aus dem Abgas der Verbrennungseinrichtung versorgt werden kann, wobei weiterhin ein Gasspeicher umfasst ist, welcher mit dem Dampfreformer fluidtechnisch zur Zwischenspeicherung des Synthesegases verschaltet ist.

Ebenso werden die der Erfindung zugrunde liegenden Aufgaben durch ein Verfahren zum Betrieb eines Kraftwerks, insbesondere eines solchen Kraftwerks gelöst, welches folgende Schritte umfasst:
- brenntechnisches Betreiben einer Verbrennungseinrichtung unter Erzeugung von Abgas;
- Versorgen eines Dampfreformers mit Wärme aus dem Abgas der Verbrennungseinrichtung;
- Versorgen des Dampfreformers mit Wasser und einem kohlenwasserstoffhaltigen ersten Brennstoff zur Erzeugung von Synthesegas mittels Reformierung;
- Ableiten des Synthesegases in einen Gasspeicher zur Zwischenspeicherung des Synthesegases.

Weiterhin werden die der Erfindung zugrunde liegenden Aufgaben gelöst durch ein Verfahren zum Nachrüsten eines Kraftwerks, welches eine Verbrennungseinrichtung aufweist, die bei brenntechnischem Betrieb Abgas erzeugt, umfassend folgende Schritte:
- Bereitstellen eines Dampfreformers zur Erzeugung von Synthesegas mittels Reformierung eines kohlenwasserstoffhaltigen ersten Brennstoffs mit Wasser;
- wärmetechnisches Verschalten des Dampfreformers mit der Verbrennungseinrichtung derart, dass die bei Betrieb der Verbrennungseinrichtung in dem Abgas befindliche Wärme wenigstens teilweise an den Dampfreformer übertragen werden kann;
- Bereitstellen eines Gasspeichers;
- fluidtechnisches Verschalten des Gasspeichers mit dem Dampfreformer derart, dass das bei Reformierung erzeugtes Synthesegas in den Gasspeicher zur Zwischenspeicherung eingeleitet werden kann.

Erfindungsgemäß ist von dem Kraftwerk ein Gasspeicher umfasst, welcher das aus dem Dampfreformer abgeleitete Synthesegas zur Zwischenspeicherung aufnehmen kann. Folglich steht das Synthesegas auch grundsätzlich zur Rückführung in den Kraftwerksprozess erneut zur Verfügung. Die Rückführung der in chemischer Form gebundenen Energie in dem Kraftwerksprozess erhöht jedoch einerseits den Gesamtwirkungsgrad des Kraftwerksprozesses, wie auch andererseits die Flexibilisierung, da je nach Bedarf die zur Verfügung stehende chemische Energie des Synthesegases aus dem Gasspeicher in den Kraftwerksprozess zurückgeführt werden kann. Zudem weist das Synthesegas einen höheren Brennwert als etwa der Ausgangsstoff der Reformierung Methan auf, welcher auch in großen Mengen im Erdgas vorhanden sein kann. Folglich stellt das Synthesegas einen höherkalorischen Brennstoff dar, der bei geeigneter Verbrennung ebenfalls mehr thermische Energie freizusetzen in der Lage ist, als bspw. der Brennstoff Methan. Dies gewährleistet eine hohe energetische Speicherdichte, die zudem relativ verlustarm erreicht werden kann.

Die aufgrund des von dem Kraftwerk umfassten Gasspeichers mögliche Zwischenspeicherung des Synthesegases sowie Rückführung in den Kraftwerksprozess erlauben folglich eine effiziente Speicherung in chemischer Form der Abwärme des bei Betrieb der Verbrennungseinrichtung abgegebenen Abgases. Ebenso können bereits bestehende Kraftwerke leicht durch einen geeigneten Gasspeicher nachgerüstet und so mit dem Dampfreformer fluidtechnisch verschaltet werden, dass das in dem Dampfreformer erzeugte Synthesegas zeitlich zwischengespeichert werden kann, um es anschließend wieder in den Kraftwerksprozess zurück zu führen.

Typischerweise ist der erste Brennstoff, welcher der Verbrennungseinrichtung zum brenntechnischen Betrieb zugeführt wird, Methan bzw. eine Mischung von Methan, wie sie etwa in Erdgas umfasst ist. Jedoch ist es durchaus möglich, auch feste Brennstoffe für die Verbrennung in der Verbrennungseinrichtung vorzusehen. Die Verbrennungseinrichtung muss folglich nicht als Gasturbine ausgeführt sein, sondern kann ebenso im Sinne einer herkömmlichen Brennkammer eines Festbrennstoff-(z.B. Kohle, Biomasse, Reststoffe) oder Ölkraftwerks ausgestaltet sein. Wird im Folgenden in erster Linie Bezug genommen auf die Verbindung der vorliegenden Erfindung mit einem Gasturbinenprozess, soll dies nicht als Einschränkung der vorliegenden Erfindung zu verstehen sein. Vielmehr ist die Erfindung allgemein in Verbindung mit allen Kraftwerken denkbar, welche eine Verbrennungseinrichtung aufweisen, die bei brenntechnischem Betrieb Abgas abgibt.

Weiterhin ist darauf hinzuweisen, dass im Sinne der vorliegenden Erfindung der erste Brennstoff als der dem Dampfreformer zugeleitete Brennstoff zu verstehen ist. Das in dem Dampfreformer gebildete Synthesegas wird erfindungsgemäß dem Gasspeicher zugeleitet. Wie weiter unten gemäß einer besonderen Ausführungsform noch dargestellt werden wird, kann das Synthesegas des Gasspeichers erneut in einem zyklischen Verfahren dem Dampfreformer zur weiteren Reformierung zugeleitet werden. Gemäß einer solchen Ausführungsform ist das Synthesegas gleichzeitig ein dem Dampfreformer zugeleiteter erster Brennstoff. Demgemäß kann der erste Brennstoff mit dem Synthesegas identisch sein, bzw. beide können Anteile des anderen aufweisen.

Gemäß einer ersten bevorzugten Ausführungsform der Erfindung ist vorgesehen, dass der Gasspeicher des Kraftwerks weiterhin mit der Verbrennungseinrichtung fluidtechnisch verschaltet ist, so dass Synthesegas der Verbrennungseinrichtung zur Verbrennung zugeführt werden kann. Ausführungsgemäß wird folglich das Synthesegas zur Verbrennung in der Verbrennungseinrichtung vorgesehen. Aufgrund der Zwischenspeicherung in dem Gasspeicher kann der Verbrennungseinrichtung je nach Anforderung auch zeitversetzt das Synthesegas zur Verbrennung zugeführt werden. Damit erhöht sich einerseits die zeitliche Flexibilität des Kraftwerks, wie auch der Gasamtwirkungsgrad, da das Synthesegas seine Energie wieder in den Verbrennungsprozess der Verbrennungseinrichtung zurück führt.

Gemäß einer weiteren Ausführungsform der Erfindung ist vorgesehen, dass weiterhin eine elektrische Heizvorrichtung vorgesehen ist, welche zur thermischen Konditionierung des dem Dampfreformer zur Reformierung zugeleiteten ersten Brennstoffs und/oder Wassers vorgesehen ist. Zudem kann der Dampfreformer auch ganz oder teilweise elektrisch beheizt werden. Die elektrische Heizvorrichtung kann insbesondere über aus den öffentlichen Stromversorgungsnetzwerken entnommene elektrische Energie betrieben werden. Damit kann die Heizvorrichtung etwa bei Vorherrschen von Überschussstrom in den öffentlichen Stromversorgungsnetzwerken kostengünstig betrieben werden. Gleichzeitig kann die durch die elektrische Heizvorrichtung abgegebene thermische Energie in chemischer Form, nämlich in Form des Synthesegases zwischengespeichert werden. Diese steht anschließend dem Kraftwerksprozess zur weiteren Verwendung etwa zur Rückverstromung wieder zur Verfügung. Durch den Betrieb der Heizeinrichtung ist ein Betrieb des Dampfreformers auch ohne Betrieb des Kraftwerks möglich.

Gemäß einer Weiterführung dieser Ausführungsform ist vorgesehen, dass die elektrische Heizvorrichtung zwischen dem Dampfreformer und dem Gasspeicher verschaltet ist. Damit kann insbesondere aus dem Gasspeicher entnommenes Synthesegas zur erneuten Reformierung in dem Dampfreformer thermisch vorbehandelt werden, bevor dieses in den Dampfreformer eingeführt wird. Gemäß einer alternativen Ausführungsform ist jedoch vorgesehen, dass die elektrische Heizvorrichtung in einer Leitung verschaltet ist, welche gewährleistet, dass der erste Brennstoff und/oder Wasser dem Dampfreformer zugeleitet wird. Allen Ausführungsformen gemein ist jedoch eine thermische Konditionierung der Edukte, die im Reformer zu Synthesegas umgesetzt werden, oder eine direkte Beheizung des Dampfreformers, wobei die thermische Behandlung unabhängig vom Betrieb der Verbrennungseinrichtung des Kraftwerks erfolgen kann.

Gemäß einer weiteren Ausführungsform der Erfindung ist vorgesehen, dass weiterhin ein Gasvorwärmer vorgesehen ist, welcher das aus dem Gasspeicher ausgeleitete Synthesegas thermisch konditioniert, und insbesondere zwischen Verbrennungseinrichtung und Gasspeicher fluidtechnisch verschaltet ist. Demgemäß kann das aus dem Gasspeicher entnommene Synthesegas thermisch konditioniert werden, so dass bspw. ein verhältnismäßig effizienterer Verbrennungsvorgang in der Verbrennungseinrichtung ablaufen kann. Der Gasvorwärmer kann als herkömmlicher Wärmetauscher bzw. auch als elektrische Heizvorrichtung ausgebildet sein.

Gemäß einer anderen bevorzugten Ausführungsform der Erfindung ist vorgesehen, dass weiterhin der Gasspeicher wenigstens teilweise mit einem Wärmetauscher verschaltet ist, bzw. als ein solcher ausgebildet ist, so dass die Wärme des darin gespeicherten Synthesegases auf ein Wärmemedium übertragen werden kann. Da insbesondere die Reformierung in dem Dampfreformer bei hohen Temperaturen erfolgt, wird das aus dem Dampfreformer ausgeleitete Synthesegas ebenfalls auf einem vergleichbar hohen Temperaturniveau dem Gasspeicher zugeführt. Wird das in dem Gasspeicher zwischengespeicherte Synthesegas nicht in zeitlicher Nähe wieder einer Nutzung zugeführt, geht die in dem Gasspeicher zwischengespeicherte thermische Energie des Synthesegases mitunter verloren. Zur Nutzbarmachung dieser Energie ist der Gasspeicher ausführungsgemäß mit einem Wärmetauscher verschaltet, bzw. als ein solcher ausgebildet, so dass die darin befindliche Energie nutzbar gemacht werden kann.

Gemäß einer Weiterführung dieser Idee ist vorgesehen, dass das Wärmemedium der dem Dampfreformer zur Reformierung zugeleitete erste Brennstoff ist. Demgemäß kann die in dem Gasspeicher befindliche thermische Energie auf den ersten Brennstoff übertragen werden, so dass dieser vor Einleitung in den Dampfreformer bereits eine geeignete thermische Konditionierung erfährt.

Entsprechend einer anderen Ausführungsform der Erfindung ist vorgesehen, dass der Dampfreformer mit dem Gasspeicher derart fluidtechnisch verschaltet ist, dass der dem Dampfreformer zur Reformierung zugeleitete erste Brennstoff aus dem Gasspeicher entnommen wird. Ausführungsgemäß erfolgt also eine zyklische Behandlung des in den Gasspeicher eingeleiteten ersten Brennstoffs durch Reformierung in dem Dampfreformer. So wird bspw. der Gasspeicher zunächst mit einem gasförmigen ersten Brennstoff angefüllt, und anschließend in wiederholten zyklischen Schritten dem Reformer zur Dampfreformierung zugeleitet. Das bei der Dampfreformierung jeweils entstehende Synthesegas wird wiederum dem Gasspeicher zur Zwischenspeicherung zugeleitet, wobei sich der erste Brennstoff mit dem zurückgeführten Synthesegas mischt und damit einen ersten Brennstoff ausbildet, welcher jeweils nach einem erfolgten Reformierungsprozess einen höheren Brennwert aufweist als zuvor. Durch wiederholte Entnahme des ersten Brennstoffes aus dem Gasspeicher kann somit der Brennwert kontinuierlich vergrößert werden.

Gemäß einer alternativen Ausführungsform ist es jedoch auch möglich, dass der Gasspeicher mehrere getrennte Zellen aufweist, in welchen der erste Brennstoff bzw. das wieder zurückgeführte Synthesegas aus dem Dampfreformer ungemischt und damit getrennt voneinander zwischengespeichert wird. Demgemäß durchläuft das in dem Gasspeicher zwischengespeicherte Synthesegas jeweils nur einen Reformierungsprozess.

Gemäß einer weiteren bevorzugten Ausführungsform der Erfindung ist vorgesehen, dass weiterhin ein Wärmetauscher vorgesehen ist, welcher dazu ausgebildet ist, Wärme des aus dem Dampfreformer abgeleiteten Synthesegases auf den dem Dampfreformer zugeleiteten ersten Brennstoff und/oder auf das dem Dampfreformer zugeleitete Wasser zu übertragen. Der Wärmetauscher ist folglich zwischen dem Gasspeicher und dem Dampfreformer wärmetechnisch verschaltet. Er erlaubt die Wärme, die das Synthesegas nach Ausleiten aus dem Reformer aufweist, in geeigneter Weise auf den ersten Brennstoff zu übertragen, bevor dieser dem Reformer zur Dampfreformierung zugeleitet wird. Die thermische Konditionierung verringert den Wärmebedarf des Reformierungsprozesses, welcher andernfalls vornehmlich durch die Wärme des Abgases der Verbrennungseinrichtung gedeckt werden muss.

Gemäß einer bevorzugten Ausführungsform der Erfindung ist der Gasspeicher als Röhrenspeicher ausgeführt. Röhrenspeicher ermöglichen eine standardisierte Errichtung und erlauben zukünftig eine nachträgliche Erweiterung der Speicherkapazität, so weit dies erforderlich sein sollte. Röhrenspeicher sind typischerweise für Drücke für bis zu 100 bar ausgelegt und erlauben die Gasspeicherung unabhängig von geologischen Rahmenbedingungen. Damit unterscheiden sich Röhrenspeicher insbesondere von Kavernenspeichern, die nur bei geeigneten geologischen Bedingungen in Betrieb genommen werden können.

Weiterhin kann nach einer anderen Ausführungsform der Erfindung das Kraftwerk eine Trocknungseinheit umfassen, welche erlaubt, Wasser aus dem aus dem Gasspeicher abgeleiteten Synthesegas abzuscheiden. Insbesondere dann, wenn der in dem Dampfreformer ablaufende Reformierungsprozess nicht vollständig, d.h. stöchiometrisch erfolgt, oder der Dampfreformer mit Wasserdampfüberschuss betrieben wird, weist das Synthesegas immer noch einen Restgehalt an Wasser auf. Dieser kann mittels der Trocknungseinheit in geeigneter Weise abgeschieden werden. Damit kann das Synthesegas bspw. für eine weitere Verbrennung mittels der Verbrennungseinrichtung des Kraftwerks vorteilhaft hinsichtlich des Wassergehalts eingestellt werden. Ebenfalls ist eine Trocknung durchzuführen, falls das Synthesegas in ein Pipelinenetz für Erdgas zur Speicherung eingeführt werden soll, um die Spezifikationen des zugeführten Gases hinsichtlich seines Taupunkts zu erfüllen.

Gemäß einer weiteren bevorzugten Ausführungsform der Erfindung ist nach dem Dampfreformer und der Vorwärmung des ersten Brenngases (Wärmetauscher zwischen Reformer-Produktgas und Reformer-Eduktgas bzw. Wasser) ein weiterer Wärmeüberträger vorgesehen, der die Auskopplung von Wärme möglich macht, um diese auf ein anderes Medium zu übertragen. Aufgrund des teilweise hohen Wassserdampfgehalts des Produktgases des Dampfreformers und des hohen Gasdrucks kann die Abkühlung des Produktgases mit teilweiser oder vollständiger Kondensation von Wasserdampf bei relativ hohen Temperaturen (etwa 80-300°C) genutzt werden, um einen Wärmeverbraucher (Industrieprozess, Fernwärmenetz, etc.) mit Wärme zu versorgen. Durch die Wärmeübertragung zur Wärmeauskopplung kann der Wasserdampfgehalt des Produktgases des Reformers erniedrigt, Wasser zurück gewonnen und Wärmeerlöse erzielt werden.

Gemäß einer besonders bevorzugten Ausführungsform der Erfindung umfasst das Kraftwerk wenigstens eine Gasturbine als Verbrennungseinrichtung. Bei Rückverstromung des aus dem Gasspeicher abgeleiteten Synthesegases kann es mitunter notwendig werden, die Gasturbine an die abweichende Qualität des Brennstoffes anzupassen. Dies ist insbesondere dann der Fall, wenn der Wasserstoffanteil in dem Synthesegas verhältnismäßig hoch ist. Eine geeignete Umrüstung der Gasturbine zur Verbrennung des aus dem Gasspeicher abgeleiteten Synthesegases ist jedoch durchaus technisch möglich (siehe: Verbrennung von Kohlegas in Siemens Gasturbinen: Erfahrungen bei der Inbetriebsetzung des Kohlevergasungs-GuD Kraftwerks Buggenun, N. Vortmeyer, B. Schetter, B. Becker, VDI Berichte Nr. 1193, Seite 597 ff., 1995).

Weiterhin ist vorgesehen, dass gemäß einer weiteren bevorzugten Ausführungsform der Erfindung der Gasspeicher korrosionsbeständig gegen Wasser ist. Insbesondere, da bei nicht vollständiger Reformierung in dem Dampfreformer das in den Gasspeicher eingeleitete Synthesegas weiterhin Spuren von Wasser umfasst, ist es vorteilhaft, den Gasspeicher korrosionsbeständig gegen Feuchtigkeit auszubilden. Hierzu eignen sich korrosionsbeständige Stahllegierungen. Zudem werden derartige Gasspeicher mitunter im Untergrund vergraben und sind damit auch der im Boden befindlichen Feuchtigkeit ausgesetzt. Die Korrosionsbeständigkeit des Gasspeichers erlaubt darüber hinaus den Reformierungsprozess in dem Dampfreformer mit einem Überschuss an Wasser zu betreiben, was mitunter auch nötig ist, um eine Kohlenstoffablagerung am Katalysator des Dampfreformers zu verhindern. Weiterhin kann es bei schwankenden Betriebsbedingungen des Kraftwerks auch zu einer nicht vollständigen Umsetzung der Edukte im Dampfreformer kommen, so dass auch dann mit dem Verbleib von Wasserdampf im Synthesegas zu Rechnen ist.

Entsprechend einer weiteren bevorzugten Ausführungsform der Erfindung ist vorgesehen, dass eine Mehrzahl an Gasspeichern von dem Kraftwerk umfasst ist, die unabhängig voneinander mit dem Dampfreformer und/oder der Verbrennungseinrichtung fluidtechnisch verschaltet sind und insbesondere unabhängig voneinander in Fluidverbindung mit dem Dampfreformer geschaltet werden können. Die Schaltung erfolgt hierbei insbesondere mittels einer geeigneten Regelung oder Steuerung über geeignete Stellmittel, wie etwa Ventile. Ausführungsgemäß kann so die Mehrzahl an Gasspeichern unabhängig zur Aufnahme von aus dem Dampfreformer abgeleitetem Synthesegas bzw. zur Bereitstellung von Synthesegas an die Verbrennungseinrichtung dienen. Gleichzeitig können unterschiedliche Gasspeicher Synthesegas unterschiedlicher Zusammensetzung aufnehmen, wobei sich die unterschiedlichen Synthesegase insbesondere hinsichtlich ihres Brennwertes unterscheiden. Damit kann ein im Vergleich zu einem lediglich einen Gasspeicher aufweisenden Kraftwerk der Betrieb eines eine Mehrzahl an Gasspeichern aufweisenden Kraftwerks deutlich flexibler und effizienter gestaltet werden.

Entsprechend einer ersten besonders bevorzugten Ausführungsform des erfindungsgemäßen Verfahrens zum Betrieb eines Kraftwerks ist vorgesehen, dass der Dampfreformer mit genau soviel Wasser zur Reformierung versorgt wird, als für eine stöchiometrische Umsetzung erforderlich ist. Der technisch hierbei zu berücksichtigende Fehler beträgt höchstens 10 %. Insofern erfolgt die in dem Dampfreformer ablaufende Reformierung praktisch stöchiometrisch, wobei das bei der Reformierung erzeugte Synthesegas im Wesentlichen wasserfrei ist.

Alternativ hierzu ist es jedoch auch möglich, dass der Dampfreformer mit mehr Wasser zur Reformierung versorgt wird, als für eine stöchiometrische Umsetzung erforderlich ist, insbesondere mit wenigstens 25 % mehr Wasser versorgt wird, als für eine stöchiometrische Umsetzung erforderlich ist. Die technisch hierbei zu berücksichtigenden Fehler betragen höchstens 10 %. Demgemäß kann keine vollständige Umsetzung der dem Dampfreformer zugeleiteten Edukte erfolgen, wobei das aus dem Dampfreformer abgeleitete Synthesegas weiterhin Wasser aufweist. Insbesondere dann, wenn die Verbrennungseinrichtung eine gasbefeuerte Gasturbine ist, die auch mit Wasserdampfinjektion betrieben werden kann, erweist sich der zusätzliche Wassergehalt in dem Synthesegas mitunter als vorteilhaft, da der Verbrennungseinrichtung kein weiteres Wasser injiziert werden muss, wenn das wasserhaltige Synthesegas zur Verbrennung kommt. Durch die Verbrennung des wasserhaltigen Synthesegases bleibt folglich der positive Effekt der Dampfinjektion (höherer Massenstrom, höhere Leistung) erhalten, wobei jedoch der Gasturbine kein zusätzliches Wasser injiziert werden muss. Ebenso erlaubt die Verbrennung von Wasser aufweisendem Synthesegas eine geeignete Kontrollierung der Verbrennungstemperaturen in der Verbrennungseinrichtung. Insbesondere bei sehr hohen Verbrennungstemperaturen, etwa mit zugesetztem Sauerstoff, bewirkt die Zugabe von Wasserdampf in dem Synthesegas eine Verminderung der Verbrennungstemperaturen. Dadurch kann sich auch eine Verminderung von Schadstoffemissionen (z.B. NOx) ergeben.

Gemäß einer weiteren vorteilhaften Ausführungsform der Erfindung wird die Reformierung in dem Dampfreformer bei einem Temperaturniveau von höchstens 650 °C ausgeführt. Bevorzugt liegt das Temperaturniveau zwischen 450°C und 650°C. Ausführungsgemäß liegt damit die Betriebstemperatur des Dampfreformers unterhalb der typischen Werte, die aus dem Stand der Technik bekannt sind. Aufgrund der geringeren Temperaturwerte, ist es jedoch möglich, das aus den Verbrennungseinrichtungen abgeführte Abgas direkt zu nutzen und auf einen weiteren Energieeintrag zu verzichten. Hierbei sind die Verbrennungseinrichtungen insbesondere als Gasturbinen ausgeführt, deren Abgastemperaturen typischerweise höchstens etwa 650 °C betragen. Aufgrund des im Vergleich zum Stand der Technik niedrigeren Temperaturniveaus bei der Reformierung wird nur eine unvollständige Umsetzung der Edukte der Reaktion 1 (siehe oben) erfolgen, wodurch weiterhin insbesondere Wasserdampf in dem aus dem Dampfreformer abgeleiteten Synthesegas verbleibt. Dieses kann, wie oben bereits ausgeführt, etwa zur geeigneten Dampfinjektion bei Betrieb einer Gasturbine bzw. zur geeigneten Einstellung der Verbrennungstemperatur in der Verbrennungseinrichtung vorteilhaft genutzt werden. Zudem kann die Kondensation von Wasserdampf, wie oben dargestellt, zur Wärmeauskopplung genutzt werden.

Gemäß einer weiteren bevorzugten Ausführungsform der Erfindung ist vorgesehen, dass die Reformierung in dem Dampfreformer nicht vollständig ausgeführt wird, insbesondere höchstens einen Umsatz von 80 % des möglichen maximalen Umsatzes erreicht. Die Vorteile, die sich daraus ergeben, sind vergleichbar den oben ausgeführten Vorteilen jener Ausführungsformen, bei welchen eine unvollständige Umsetzung der Edukte in dem Dampfreformer erfolgt. Insbesondere bewirkt ein unvollständiger Umsatz das Vorhandensein von Wasser in dem aus dem Dampfreformer abgeleiteten Synthesegas. Zudem ermöglicht der Ablauf der Reaktion mit dem Ziel des nicht vollständigen Umsatzes eine Reduktion der Dampfreformergröße und den Betrieb bei wechselnden, teilweise unvorteilhaften Betriebsbedingungen (flexibler Betrieb).

Entsprechend einer weiteren vorteilhaften Ausführungsform der Erfindung ist vorgesehen, dass das für die Reformierung in dem Dampfreformer erforderliche Wasser dem Dampfreformer als Wasserdampf zugeführt wird, welcher insbesondere in einem separaten Dampferzeuger aus flüssigem Wasser erzeugt wird. Alternativ hierzu kann der Wasserdampf auch aus dem Wasser-Dampf-Kreislauf eines Kraftwerks entnommen werden. Aufgrund der Einbringung von Wasserdampf in den Dampfreformer ist keine weitere thermische Energie notwendig, um das Wasser für die Reformierung in die dampfförmige Phase zu überführen.

Alternativ hierzu ist es jedoch auch denkbar, dass das für die Reformierung in dem Dampfreformer erforderliche Wasser dem Dampfreformer als flüssiges Wasser zugeführt wird. Die Verdampfung des Wassers erfolgt folglich in dem Dampfreformer selbst, so dass dem Dampfreformer, die für die Verdampfung des Wassers erforderliche thermische Energie zusätzlich zugeführt werden muss. Die Zuführung von flüssigem Wasser an den Dampfreformer, ist jedoch besonders einfach technisch zu verwirklichen.

Gemäß einer weiteren besonders bevorzugten Ausführungsform des erfindungsgemäßen Verfahrens ist vorgesehen, dass zur thermischen Konditionierung des dem Dampfreformer zur Reformierung zugeleiteten ersten Brennstoffs und/oder Wassers eine elektrische Heizvorrichtung vorgesehen ist oder der Reformer direkt elektrisch beheizt wird, die wenigstens teilweise, bevorzugt ausschließlich mit Überschussstrom aus dem öffentlichen Stromversorgungsnetzwerk versorgt wird. Die elektrische Heizvorrichtung ermöglicht folglich die Umsetzung von elektrischer Energie in thermische Energie, die nach erfolgter Reformierung in dem Dampfreformer in Form von chemischer Energie in dem Gasspeicher zwischengespeichert werden kann. Insbesondere dann, wenn Überschussstrom sehr günstig oder sogar gegen Vergütung aus den öffentlichen Stromversorgungsnetzwerken entnommen werden kann, ist folglich eine sehr wirtschaftliche Betriebsweise mittels des ausführungsgemäßen Verfahrens möglich.

Entsprechend einer weiteren besonders bevorzugten Ausführungsform des erfindungsgemäßen Verfahrens ist vorgesehen, dass zum brenntechnischen Betrieb der Verbrennungseinrichtung dieser ein zweiter kohlenwasserstoffhaltiger Brennstoff zugeführt wird, und dem Dampfreformer der erste kohlenwasserstoffhaltige Brennstoff, wobei der zweite Brennstoff einen höheren Brennwert aufweist als der erste Brennstoff. In anderen Worten ist es vorgesehen, dass der erste Brennstoff niederkalorischer ist als der zweite. Die Reformierung in dem Dampfreformer soll folglich den niederkalorischen ersten Brennstoff soweit hinsichtlich seines Brennwertes anpassen, dass dieser geeignet zu einem späteren Zeitpunkt etwa auch der Verbrennungseinrichtung zugeführt werden kann. Damit die Verbrennungseinrichtung jedoch ausreichend mit hochkalorischem Brennstoff versorgt werden kann, wird dieser ein entsprechend höherkalorischer Brennstoff zugeführt. Der Betrieb der Verbrennungseinrichtung mittels eines höherkalorischen Brennstoffes kann insbesondere dann notwendig sein, wenn bei einer niedrigeren Brennstoffqualität die Verbrennungseinrichtung andernfalls angepasst werden müsste. Insbesondere bei einer als Gasturbine ausgeführten Verbrennungseinrichtung kann diese ohne technischen Umbau nur mit einem verhältnismäßig höherkalorischem Brennstoff betrieben werden, wobei jedoch die Zumischung von niederkalorischem Brennstoff durchaus denkbar ist. Ebenso kann es ausführungsgemäß vorgesehen sein, nach geeigneter Umsetzung des ersten Brennstoffs in dem Dampfreformer zu einem höherkalorischem Brennstoff diesen zu einem späteren Zeitpunkt etwa zusammen mit dem zweiten Brennstoff gemeinsam zur Verbrennung zu bringen.

Gemäß einer Weiterbildung dieser Ideen ist vorgesehen, dass zum brenntechnischen Betrieb der Verbrennungseinrichtung dieser das Synthesegas aus dem Gasspeicher und gleichzeitig der zweite kohlenwasserstoffhaltige Brennstoff zugeführt werden. Beide Brennstoffe können bspw. vor Einleitung auch in einem geeigneten Verhältnis zueinander gemischt werden, um einen vorteilhaften Gesamtbrennwert einzustellen. Die Zumischung des Synthesegases zum zweiten kohlenwasserstoffhaltigen Brennstoff gewährleistet, dass die Schwankung des Gesamtbrennwertes des Gemisches stets geeignet für die Verbrennung in der Verbrennungseinrichtung eingestellt werden kann. Das Mischungsverhältnis vom zweiten kohlenwasserstoffhaltigen Brennstoff zum Synthesegas kann entsprechend dem Brennwert des Synthesegases eingestellt werden.

Entsprechend einer weiteren besonders bevorzugten Ausführungsform des Verfahrens ist vorgesehen, dass dieses weiterhin folgende Schritte mit umfasst:
- Entnahme des dem Dampfreformer zugeleiteten kohlenwasserstoffhaltigen ersten Brennstoffs aus dem Gasspeicher;
- gleichzeitiges Zwischenspeichern des in der Reformierung in dem Dampfreformer erzeugten Synthesegases in dem Gasspeicher;
- Zuleiten des in dem Gasspeicher zwischengespeicherten Synthesegases an die Verbrennungseinrichtung zum brenntechnischen Betreiben, wenn der Brennwert des Synthesegases über einem vorbestimmten Grenzwert liegt;

Gemäß einer besonderen Ausführungsform erfolgt die Zuleitung des in dem Gasspeicher zwischengespeicherten Synthesegases an die Verbrennungseinrichtung nur dann, wenn der Brennwert des Synthesegases um mindestens 10 % größer ist als der Brennwert des ursprünglich eingeleiteten ersten Brennstoffs. Folglich erfolgt die Einleitung und damit auch Zumischung des in dem Gasspeicher zwischengespeicherten Synthesegases zur Verbrennungseinrichtung erst dann, wenn der Brennwert des Synthesegases geeignet konditioniert wurde. Der Brennwert des Synthesegases kann hierbei aufgrund der chemischen Zusammensetzung abgeschätzt werden, bzw. lässt sich aufgrund der Reaktionsbedingungen bzw. Reaktionszeit in dem Dampfreformer ableiten. In einer Weiterführung hierzu kann die Zuleitung des in dem Gasspeicher zwischengespeicherten Synthesegases an die Verbrennungseinrichtung auch batchweise erfolgen, d.h. aus dem Gasspeicher wird nur intervallweise Synthesegas zur Verbrennung in der Gasturbine entnommen, während zu den anderen Zeiten ein zweites Brenngas, etwa Erdgas, in der Verbrennungseinrichtung verbrannt wird.

Nachfolgend soll die Erfindung anhand von einzelnen in Figuren dargestellten Ausführungsformen im Detail erklärt werden. Hierbei stellt die Konkretisierung des Erfindungsgegenstandes in den Figuren keine Einschränkung hinsichtlich der Allgemeinheit der beanspruchten Erfindung dar.

Weiterhin ist darauf hinzuweisen, dass die Figuren eine schematische Darstellung wiedergeben, die ebenfalls keine Einschränkung hinsichtlich der möglichen Ausführbarkeit der Erfindung darstellen.

Die in den Figuren aufgeführten einzelnen technischen Merkmale werden für sich alleine sowie in beliebiger Zusammensicht mit anderen Merkmalen beansprucht. Dem Fachmann ist hierbei eine Kombination der Merkmale aufgrund der vorliegenden Lehre verständlich.

Hierbei zeigen die Figuren Folgendes:
- Figur 1: eine schematische Darstellung des aus dem Stand der Technik bekannten Kraftwerks zur Ausführung einer Reformierung mittels eines Dampfreformers;
- Figur 2: eine erste Ausführungsform des erfindungsgemäßen Kraftwerks in einer schematischen Schaltansicht;
- Figur 3: eine weitere Ausführungsform des erfindungsgemäßen Kraftwerks in einer schematischen Schaltansicht;
- Figur 4: eine weitere Ausführungsform des erfindungsgemäßen Kraftwerks in einer schematischen Schaltansicht;
- Figur 5: eine flussdiagrammatische Darstellung einer ersten Ausführungsform des erfindungsgemäßen Verfahrens zum Betrieb eines solchen Kraftwerks;
- Figur 6: eine flussdiagrammatische Darstellung einer Ausführungsform des erfindungsgemäßen Verfahrens zum Nachrüsten eines Kraftwerks.

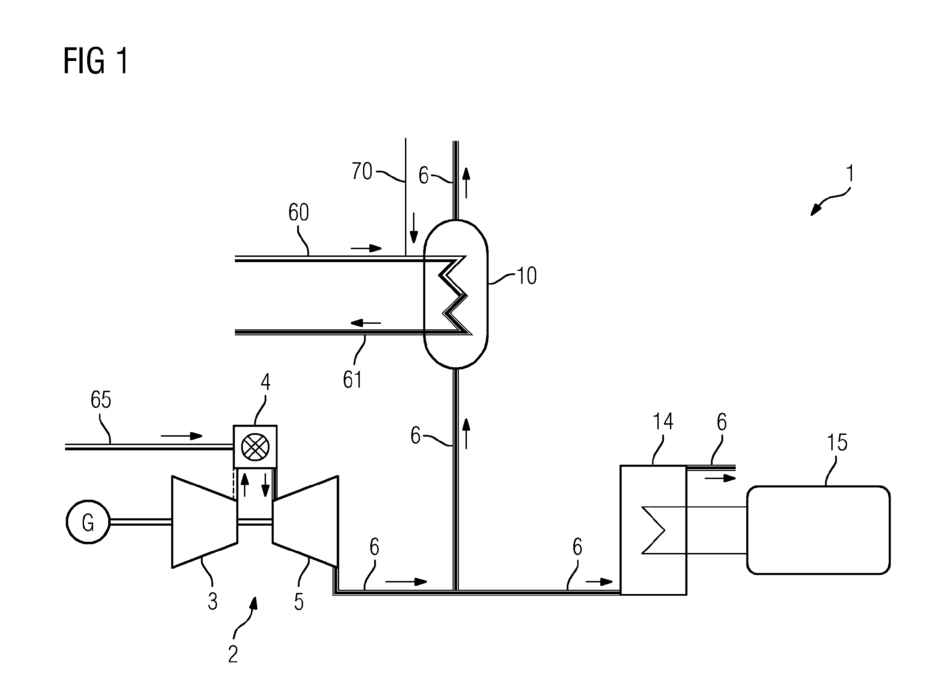

Figur 1 zeigt eine schematische Darstellung eines aus dem Stand der Technik bekannten Kraftwerks 1, welches neben einer als Gasturbine ausgebildeten Verbrennungseinrichtung 2 einen Dampfreformer 10 aufweist, der zur Umsetzung eines ersten Brennstoffs 60 und Wasser 70 zu Synthesegas 61 ausgebildet ist. Die in dem Dampfreformer 10 ablaufende Reformierung wird hierbei mit Wärme aus dem Abgas 6 der Verbrennungseinrichtung 2 versorgt. Gleichzeitig wird ein Abhitzedampferzeuger 14 mit Wärme aus dem Abgas 6 versorgt, der es ermöglicht, Wasser in einem Wasser-Dampf-Kreislauf 15 thermisch zu konditionieren.

Das Kraftwerk 1, welches als mit einem Dampfreformer 10 gekoppeltes Gas- und Dampf-Kraftwerk ausgebildet ist, erzeugt die für die Reformierung erforderliche Wärme durch die Verbrennung eines zweiten Brennstoffs 65 in der Brennkammer 4 der Gasturbine. Der zweite Brennstoff 65 wird hierbei mit durch die Verdichtereinheit 3 komprimierter Luft verbrannt und über die Turbineneinheit 5 entspannt und als Abgas 6 abgegeben. Das Abgas 6 wird dem Dampfreformer 10 zugeleitet und durch den Wärmeübertrag teilweise abgekühlt. Gleichzeitig erfolgt eine Zuleitung eines Teilstroms des Abgases 6 zum Abhitzedampferzeuger 14, wobei die in dem Abgas 6 befindliche Wärme zum Teil zur Konditionierung des Wassers in dem Wasser-Dampf-Kreislauf 15 bereitgestellt wird.

Nach erfolgter Reformierung in dem Dampfreformer 10 wird das darin erzeugte Synthesegas 61 abgeleitet, und einer Nutzung außerhalb des Kraftwerks zugeführt. Die in dem Dampfreformer 10 ablaufenden chemischen Vorgänge entsprechen hierbei im Wesentlichen denen gemäß Reaktion 1 bzw. Reaktion 2, und gewährleisten, dass der erste Brennstoff 60 zusammen mit Wasser 70 in dampfförmiger Phase im Wesentlichen zu Kohlenmonoxid und Wasserstoff umgesetzt wird.

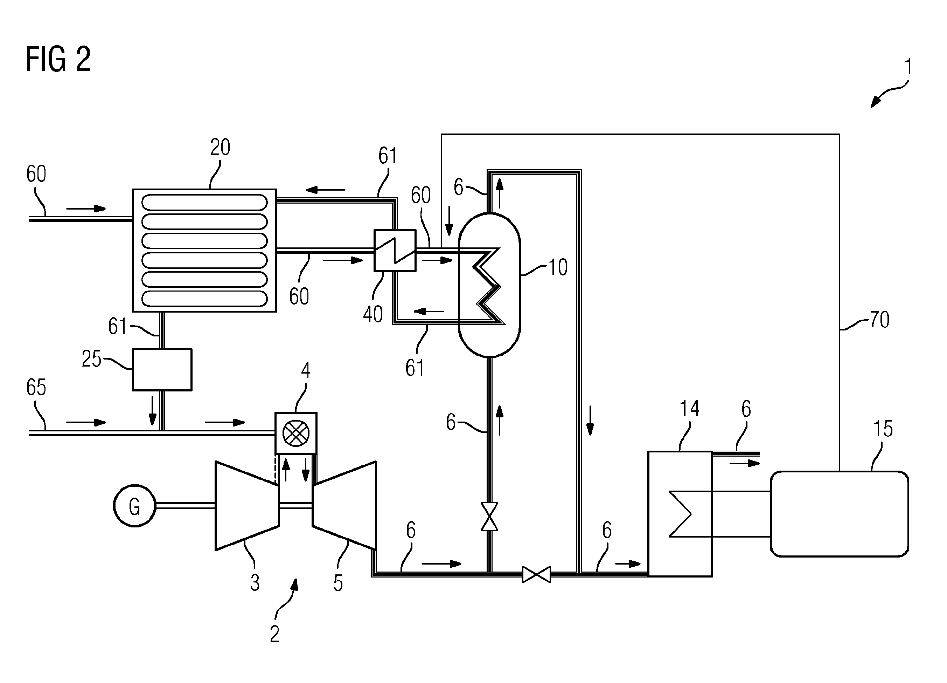

Figur 2 zeigt eine erste Ausführungsform des erfindungsgemäßen Kraftwerks 1, welches ebenfalls als Gas- und Dampfkraftwerk ausgebildet ist. Alternativ kann diese Ausführungsform jedoch auch jede Kraftwerksart sein, welche eine geeignete Verbrennungseinrichtung 2 aufweist, die ein Abgas 6 zur Entnahme von thermischer Energie abgibt.

Ausführungsgemäß umfasst das Kraftwerk 1 neben der als Gasturbine ausgeführten Verbrennungseinrichtung 2 ebenfalls einen Dampfreformer 10 zur Reformierung eines ersten Brennstoffs 60 und Wasser 70. Das Wasser 70 wird hierbei als Wasserdampf dem Wasser-Dampf-Kreislauf 15 entnommen, bzw. alternativ mit Hilfe des Abhitzedampferzeugers 14 thermisch aufbereitet. Der Wasserdampf wird in die Zuleitung des ersten Brennstoffs 60 zum Dampfreformer 10 eingeleitet. Die für die Reformierung notwendige Wärme wird dem Dampfreformer ausführungsgemäß ebenfalls durch das Abgas 6 zur Verfügung gestellt. Das Abgas 6 wird hierzu als Teilstrom direkt dem Dampfreformer 10 zugeleitet. Nach Wärmeübertragung in dem Dampfreformer 10 wird das Abgas 6 einem Abhitzedampferzeuger 14 zugeführt. Gleichzeitig wird ein anderer Teilstrom dem Abhitzedampferzeuger 14 zugeleitet, um diesen mit Wärme zu versorgen. Die Regelung bzw. Steuerung der zwei Teilströme des Abgases 6 erfolgt durch geeignete Einstellung zweier Stellmittel, speziell zweier Ventile. Alternativ oder auch zusätzlich kann aus dem Abhitzedampferzeuger 14 zusätzlich Wärme für den Betrieb des Dampfreformers 10 entnommen werden, falls dies notwendig ist. Diese kann wiederum über eine gezielte Abzweigung eines Wärme leitenden Prozessstromes erfolgen, kann jedoch auch mittels eines geeignet ausgebildeten Wärmetauschers verwirklicht werden.

Ausführungsgemäß weist das Kraftwerk 1 zudem einen Gasspeicher 20 auf, welcher mit dem ersten Brennstoff 60 versorgt wird. Zur Versorgung des Dampfreformers 10 mit erstem Brennstoff 60 wird dieser aus dem Gasspeicher 20 gezielt entnommen oder es wird Brennstoff direkt zugeführt. Nach erfolgter Reformierung in dem Dampfreformer 10 wird das abgeleitete Synthesegas 61 erneut dem Gasspeicher 20 zugeführt. Hierbei kann das Synthesegas 61 sich ausführungsgemäß mit dem ersten Brennstoff 60 mischen, bzw. in getrennten Zellen unabhängig voneinander bevorratet werden. Zur geeigneten thermischen Konditionierung des dem Dampfreformer 10 zugeführten ersten Brennstoffs 60 ist ein Wärmetauscher 40 vorgesehen, der erlaubt, die Wärme des Synthesegases 61 auf den ersten Brennstoff 60 zu übertragen, bevor dieser noch in den Dampfreformer 10 eingeleitet wird.

Ausführungsgemäß ist ferner auch vorgesehen, dass das in dem Gasspeicher 20 befindliche Synthesegas 61 mit dem in der Brennkammer 4 der Gasturbine zum brenntechnischen Betrieb verbrannten zweiten Brennstoff 65 gemischt wird. Beide, Synthesegas 61 und zweiter Brennstoff 65, werden vor Zuleitung an die Brennkammer 4 in einer geeignet zusammengeführten Leitung gemischt. Um aus dem Gasspeicher 20 entnommenes Synthesegas 61 hierbei noch geeignet thermisch zu konditionieren, kann das aus dem Gasspeicher 20 entnommene Synthesegas mit einem Gasvorwärmer 25 erwärmt werden. Der Gasvorwärmer 25 kann hierbei als elektrische Heizvorrichtung bzw. als Wärmetauscher ausgeführt sein. Durch die Zusammenführung von Synthesegas 61 und zweitem Brennstoff 65 entsteht ein Brennstoffgemisch, dessen Brennwert sich aus den Einzelbrennwerten der ungemischten Stoffe ergibt. Zur geeigneten Einstellung des Gesamtbrennwerts ist es ausführungsgemäß vorgesehen, den zweiten Brennstoff 65 jeweils nur so viel Synthesegas 61 zuzuleiten, dass der Gesamtbrennwert des Brennstoffgemisches innerhalb eines vorbestimmten Bandes an erlaubten Brennstoffwerten liegt.

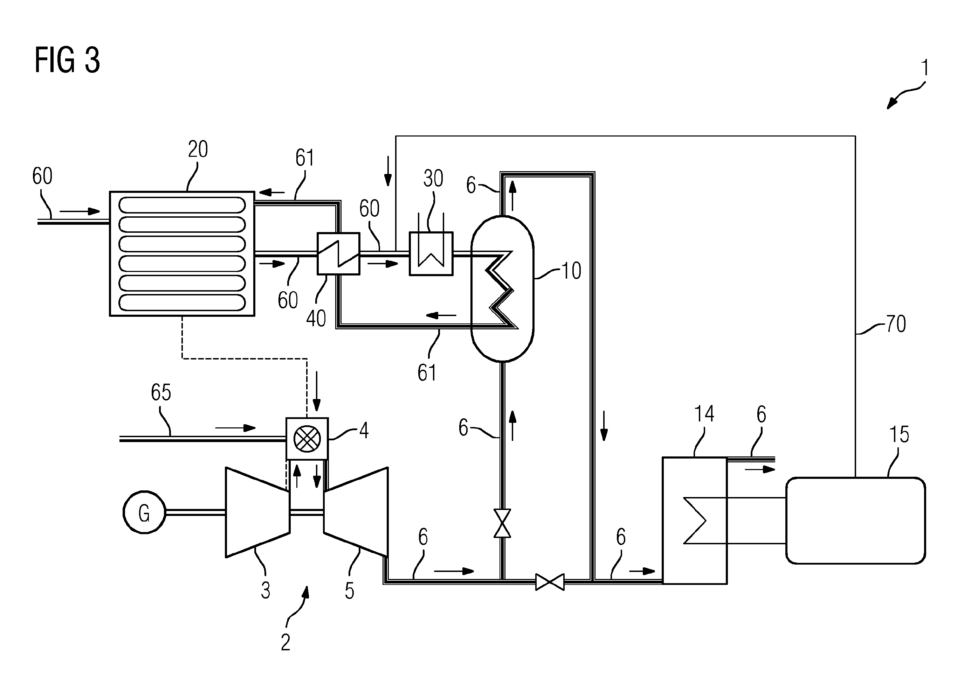

Figur 3 zeigt eine weitere Ausführungsform des erfindungsgemäßen Kraftwerks 1, welches sich von dem in Figur 2 gezeigten Kraftwerk 1 lediglich dahingehend unterscheidet, dass zwischen Gasspeicher 20 und Dampfreformer 10 eine elektrische Heizvorrichtung in die Zuleitung zum Dampfreformer 10 geschaltet ist, die erlaubt, das Gemisch aus erstem Brennstoff 60 und Wasser 70 thermisch zu konditionieren. Alternativ, jedoch vorliegend nicht gezeigt, kann die Heizvorrichtung auch direkt in den Dampfreformer 10 integriert sein oder der Dampfreformer 10 kann direkt elektrisch beheizt werden. So kann insbesondere dann, wenn dem Abgas 6 der Verbrennungsseinrichtung 2 nicht ausreichend Wärme entnommen werden kann, etwa bei Stillstand der Verbrennungseinrichtung 2, das Gemisch aus erstem Brennstoff 60 und Wasser 70 mit ausreichend Wärme versorgt werden, so dass in dem Dampfreformer 10 die Reformierung der Edukte erfolgen kann. Andererseits kann die thermische Konditionierung mittels der elektrischen Heizvorrichtung 30 auch nur die thermische Konditionierung durch den Strom des Abgases 6 bzw. mittels des Abhitzedampferzeugers 14 unterstützen.

Die fluidtechnische wie wärmetechnische Verbindung von Gasspeicher 20 mit Brennkammer 4 der Gasturbine ist vorliegend nur durch einen gestrichelten Pfeil angedeutet, soll jedoch der Ausführungsform gemäß der Figur 2 im Wesentlichen entsprechen.

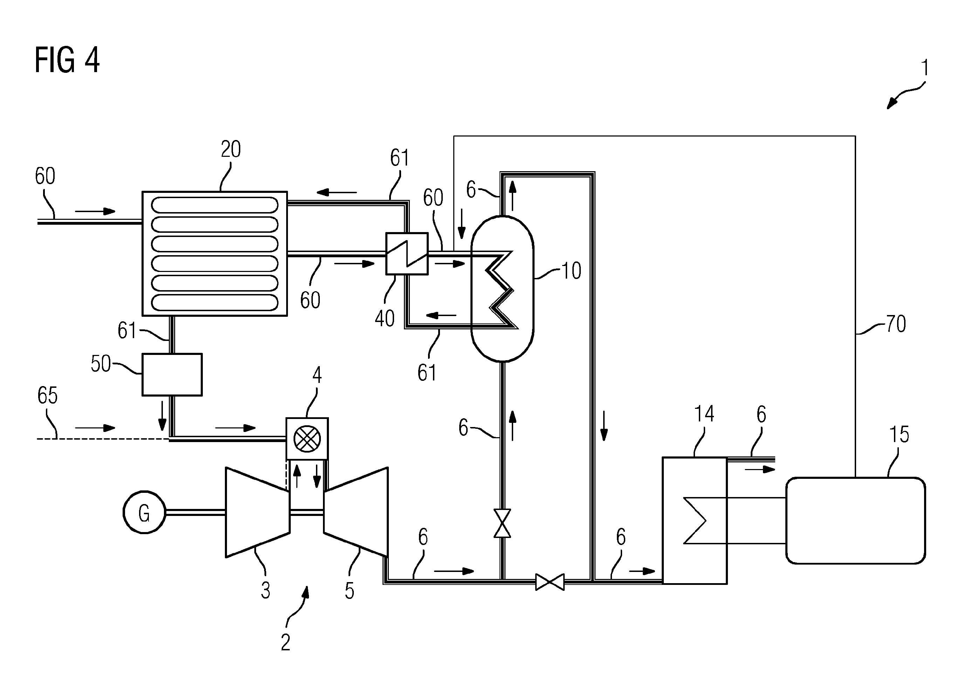

Figur 4 zeigt eine weitere Ausführungsform des erfindungsgemäßen Kraftwerks 1, welches sich von dem in Figur 2 gezeigten Kraftwerk 1 lediglich dahingehend unterscheidet, dass der Gasvorwärmer 25 gemäß Figur 2 durch eine Trocknungseinheit 50 ersetzt ist. Die Trocknungseinheit 50 erlaubt, Wasser aus dem Synthesegas 61 abzuscheiden, wenn dieses aus dem Gasspeicher 20 entnommen wird. Insbesondere kann so der der Brennkammer 4 der Gasturbine zugeführte Wassergehalt kontrolliert eingestellt werden, so dass etwa der Gesamtwassergehalt des Gasgemisches aus Synthesegas 61 und zweitem Brennstoff 65 gezielt in einem vorbestimmten Wertebereich konstant gehalten werden kann.

Alternativ kann die Trocknungseinheit 50 als Wärmeüberträger ausgeführt werden und zwischen den Wärmetauscher 40 und den Gasspeicher 20 in Leitung 61 integriert sein. Dadurch ist es möglich vor dem Gasspeicher 20 dem Produktgas des Dampfreformers 10 Wärme zu entziehen und den Wasserdampfgehalt durch Kondensation zu erniedrigen. Aufgrund des erhöhten Druckniveaus im System findet so die Kondensation des Wasserdampfanteils bei Temperaturen oberhalb von 80°C statt und die Wärme kann genutzt werden.

Weiterhin verdeutlicht die in Figur 4 gezeigte Ausführungsform, dass der dem Gasspeicher 20 zugeleitete erste Brennstoff 60 einen von dem zweiten Brennstoff 65 unterschiedlichen Brennwert aufweist. Dementsprechend sind die symbolisierten Pfeile als durchgehend (erster Brennstoff 60) wie auch als gestrichelt (zweiter Brennstoff 65) gezeichnet. Ausführungsgemäß ist es denkbar, eine Mischung von zweitem Brennstoff 65 und Synthesegas 61 erst dann vorzunehmen, wenn der Brennwert des Synthesegases 61 einen vorbestimmten Mindestwert überschreitet. Hierbei ist zu berücksichtigen, dass der Brennwert des dem Gasspeicher 20 zugeleiteten ersten Brennstoffs 60 unter diesem Mindestwert liegt. Erst durch Ausführung der Reformierung in dem Dampfreformer 10 sowie durch Zurückleitung des dabei entstehenden Synthesegases 61 in den Gasspeicher 20 wird der Gasspeicher 20 zunehmend mit Synthesegas gefüllt, welches einen ausreichend hohen Brennwert aufweist.

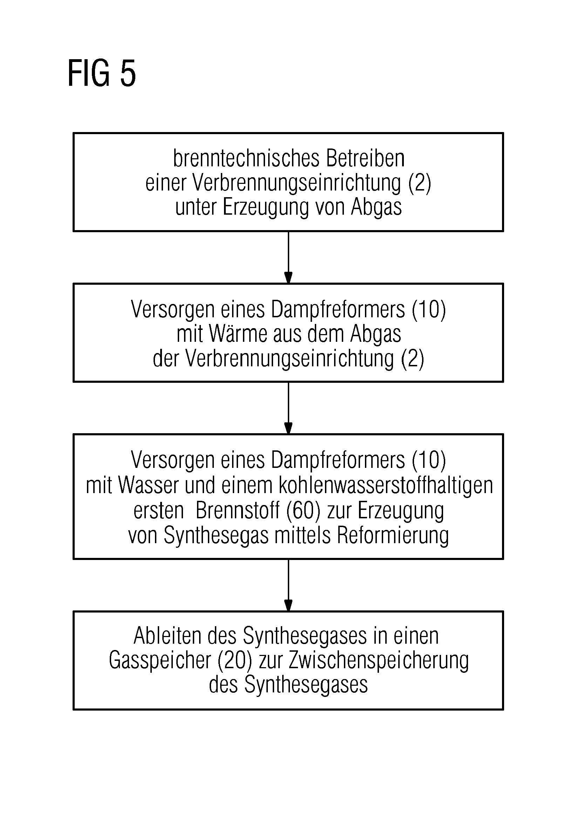

Figur 5 zeigt eine flussdiagrammatische Darstellung einer Ausführungsform eines erfindungsgemäßen Verfahrens zum Betrieb eines Kraftwerks 1, insbesondere eines vorab dargestellten Kraftwerks 1, welches folgende Schritte umfasst:
- brenntechnisches Betreiben einer Verbrennungseinrichtung 2 unter Erzeugung von Abgas 6;
- Versorgen eines Dampfreformers 10 mit Wärme aus dem Abgas der Verbrennungseinrichtung 2;
- Versorgen des Dampfreformers 10 mit Wasser und einem kohlenwasserstoffhaltigen ersten Brennstoff 60 zur Erzeugung von Synthesegas 61 mittels Reformierung;
- Ableiten des Synthesegases in einen Gasspeicher 20 zur Zwischenspeicherung des Synthesegases 61.

Gemäß einer Weiterführung dieser Idee wird das in dem Gasspeicher 20 zwischengespeicherte Synthesegas 61 der Verbrennungseinrichtung 2 zum brenntechnischen Betrieb zugeleitet. Und gemäß einer weiteren bevorzugten Ausführungsform ist es denkbar, dass das in dem Gasspeicher 20 zwischengespeicherte Synthesegas 61 als erster Brennstoff 60 erneut dem Dampfreformer 10 zugeleitet wird.

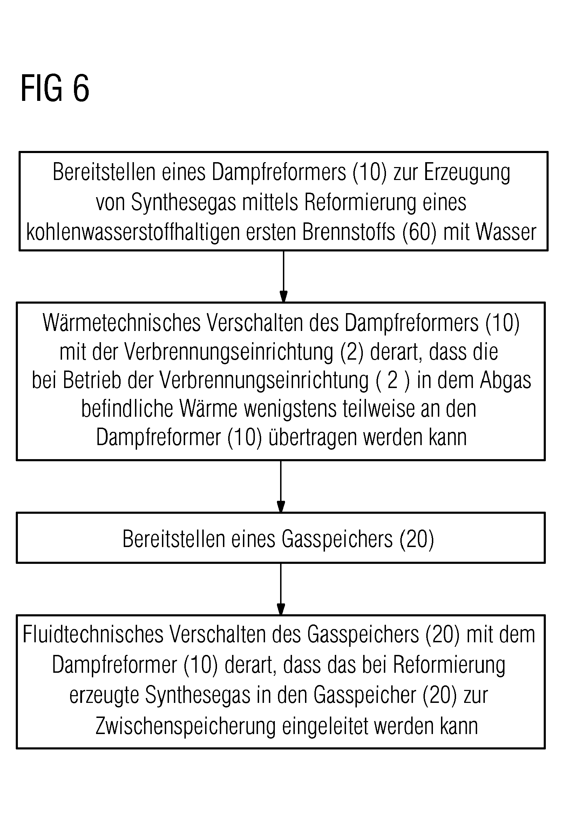

Figur 6 zeigt in flussdiagrammatischer Darstellung eine erste Ausführungsform des erfindungsgemäßen Verfahrens zum Nachrüsten eines Kraftwerks 1, welches eine Verbrennungseinrichtung 2 aufweist, die bei brenntechnischem Betrieb ein Abgas 6 erzeugt, welches folgende Schritte umfasst:
- Bereitstellen eines Dampfreformers 10 zur Erzeugung von Synthesegas 61 mittels Reformierung eines kohlenwasserstoffhaltigen ersten Brennstoffs 60 mit Wasser;
- wärmetechnische Verschaltung des Dampfreformers 10 mit der Verbrennungseinrichtung 2 derart, dass die bei Betrieb der Verbrennungseinrichtung in dem Abgas 6 befindliche Wärme wenigstens teilweise an den Dampfreformer 10 übertragen werden kann;
- Bereitstellen eines Gasspeichers 20;
- fluidtechnisches Verschalten des Gasspeichers 20 mit dem Dampfreformer 10 derart, dass das bei Reformierung erzeugte Synthesegas 61 in den Gasspeicher 20 zur Zwischenspeicherung eingeleitet werden kann;

Weitere Ausführungsformen ergeben sich aus den Unteransprüchen.

## Patentansprüche

1. Kraftwerk (1) aufweisend eine bei brenntechnischem Betrieb Abgas abgebende Verbrennungseinrichtung (2), einen Dampfreformer (10) zur Erzeugung von Synthesegas (61) mittels Reformierung eines kohlenwasserstoffhaltigen ersten Brennstoffs (60) mit Wasser (70), wobei der Dampfreformer (10) mit der Verbrennungseinrichtung (2) derart wärmetechnische verschaltet ist, dass bei brenntechnischem Betrieb der Verbrennungseinrichtung (2) der Dampfreformer (10) mit Wärme aus dem Abgas der Verbrennungseinrichtung (2) versorgt werden kann,
**dadurch gekennzeichnet, dass** weiterhin ein Gasspeicher (20) umfasst ist, welcher mit dem Dampfreformer (10) fluidtechnisch zur Zwischenspeicherung des Synthesegases (61) verschaltet ist.

2. Kraftwerk nach Anspruch 1,
**dadurch gekennzeichnet, dass** der Gasspeicher (20) weiterhin mit der Verbrennungseinrichtung (2) fluidtechnisch verschaltet ist, so dass Synthesegas (61) der Verbrennungseinrichtung (2) zur Verbrennung zugeführt werden kann.

3. Kraftwerk nach einem der vorhergehenden Ansprüche, **dadurch gekennzeichnet, dass** weiterhin eine elektrische Heizvorrichtung (30) vorgesehen ist, welche zur thermischen Konditionierung des dem Dampfreformer (10) zur Reformierung zugeleiteten ersten Brennstoffs (60) und/oder Wassers (70) vorgesehen ist.

4. Kraftwerk nach einem der vorhergehenden Ansprüche, **dadurch gekennzeichnet, dass** weiterhin der Gasspeicher (20) wenigstens teilweise mit einem Wärmetauscher verschaltet ist, bzw. als ein solcher ausgebildet ist, so dass die Wärme des darin gespeicherten Synthesegases (61) auf ein Wärmemedium übertragen werden kann.

5. Kraftwerk nach einem der vorhergehenden Ansprüche, **dadurch gekennzeichnet, dass** der Dampfreformer (10) mit dem Gasspeicher (20) derart fluidtechnisch verschaltet ist, dass der dem Dampfreformer (10) zur Reformierung zugeleitete erste Brennstoff (60) aus dem Gasspeicher (20) entnommen wird.

6. Kraftwerk nach einem der vorhergehenden Ansprüche, **dadurch gekennzeichnet, dass** weiterhin ein Wärmetauscher (40) vorgesehen ist, welcher dazu ausgebildet ist, Wärme des aus dem Dampfreformer (20) abgeleiteten Synthesegases (61) auf den dem Dampfreformer (20) zugeleiteten ersten Brennstoff (60) und/oder auf das dem Dampfreformer (20) zugeleitete Wasser (70) zu übertragen.

7. Verfahren zum Betrieb eines Kraftwerks, insbesondere eines Kraftwerks (1) gemäß einem der vorhergehenden Ansprüche, umfassend folgende Schritte:
- brenntechnisches Betreiben einer Verbrennungseinrichtung (2) unter Erzeugung von Abgas;
- Versorgen eines Dampfreformers (10) mit Wärme aus dem Abgas der Verbrennungseinrichtung (2);
- Versorgen des Dampfreformers (10) mit Wasser (70) und einem kohlenwasserstoffhaltigen ersten Brennstoff (60) zur Erzeugung von Synthesegas (61) mittels Reformierung;
- Ableiten des Synthesegases (61) in einen Gasspeicher (20) zur Zwischenspeicherung des Synthesegases (61);

8. Verfahren nach Anspruch 7,
**dadurch gekennzeichnet, dass** der Dampfreformer (10) mit mehr Wasser (70) zur Reformierung versorgt wird, als für eine stöchiometrische Umsetzung erforderlich ist, insbesondere mit wenigstens 25% mehr Wasser (70) versorgt wird, als für eine stöchiometrische Umsetzung erforderlich ist.

9. Verfahren nach einem der Ansprüche 7 oder 8,
**dadurch gekennzeichnet, dass** die Reformierung in dem Dampfreformer (10) bei einem Temperaturniveau von höchstens 650°C ausgeführt wird.

10. Verfahren nach einem der Ansprüche 7 bis 9, **dadurch gekennzeichnet, dass** die Reformierung in dem Dampfreformer (10) nicht vollständig ausgeführt wird, insbesondere höchstens einen Umsatz von 80% des möglichen Maximalumsatzes erreicht.

11. Verfahren nach einem der Ansprüche 7 bis 10, **dadurch gekennzeichnet, dass** das für die Reformierung in dem Dampfreformer (10) erforderliche Wasser (70) dem Dampfreformer (10) als Wasserdampf zugeführt wird, welcher insbesondere in einem separaten Dampferzeuger (60) aus flüssigem Wasser (70) erzeugt wird.

12. Verfahren nach einem der Ansprüche 7 bis 11, **dadurch gekennzeichnet, dass** zur thermischen Konditionierung des dem Dampfreformer (10) zur Reformierung zugeleiteten ersten Brennstoffs (60) und/oder Wassers (70) eine elektrische Heizvorrichtung (30) vorgesehen ist, die wenigstens teilweise, bevorzugt, ausschließlich, mit Überschussstrom aus dem öffentlichen Stromversorgungsnetzwerk versorgt wird.

13. Verfahren nach einem der Ansprüche 7 bis 12, **dadurch gekennzeichnet, dass** zum brenntechnischen Betreiben der Verbrennungseinrichtung (2) dieser ein zweiter kohlenwasserstoffhaltige Brennstoff (65) zugeführt wird, und dem Dampfreformer (10) der erste kohlenwasserstoffhaltiger Brennstoff (65), wobei der zweite Brennstoff (65) einen höheren Brennwert aufweist, als der erste Brennstoff (60).

14. Verfahren nach Anspruch 13,
**dadurch gekennzeichnet, dass** weiterhin folgende Schritte mit umfasst sind:
- Entnahme des dem Dampfreformer (10) zugeleiteten kohlenwasserstoffhaltigen ersten Brennstoffs (60) aus dem Gasspeicher (20);
- gleichzeitiges Zwischenspeichern des in der Reformierung in dem Dampfreformer (10) erzeugten Synthesegases (61) in dem Gasspeicher (20);
- Zuleiten des in dem Gasspeicher (2) zwischengespeicherten Synthesegases (61) an die Verbrennungseinrichtung (2) zum brenntechnischen Betreiben, wenn der Brennwert des Synthesegases (61) über einem vorbestimmten Grenzwert liegt;

15. Verfahren zum Nachrüsten eines Kraftwerks (1), welches eine Verbrennungseinrichtung (2) aufweist, die bei brenntechnischem Betrieb Abgas erzeugt,
umfassend folgende Schritte:
- Bereitstellen eines Dampfreformers (10) zur Erzeugung von Synthesegas (61) mittels Reformierung eines kohlenwasserstoffhaltigen ersten Brennstoffs (60) mit Wasser (70);
- Wärmetechnisches Verschalten des Dampfreformers (10) mit der Verbrennungseinrichtung (2) derart, dass die bei Betrieb der Verbrennungseinrichtung (2) in dem Abgas befindliche Wärme wenigstens teilweise an den Dampfreformer (10) übertragen werden kann.
- Bereitstellen eines Gasspeichers (20);
- Fluidtechnisches Verschalten des Gasspeichers (20) mit dem Dampfreformer (10) derart, dass das bei Reformierung erzeugte Synthesegas (61) in den Gasspeicher (20) zur Zwischenspeicherung eingeleitet werden kann.
